Europäisches Patentamt

European Patent Office

Office européen des brevets

(11) Veröffentlichungsnummer: **0 634 426 A1**

## (12) EUROPÄISCHE PATENTANMELDUNG

(21) Anmeldenummer: 94107260.5

(22) Anmeldetag: 10.05.94

(51) Int. Cl.6: **C08F 210/04**, C08F 4/658

(30) Priorität: 12.07.93 DE 4323233

(43) Veröffentlichungstag der Anmeldung:
18.01.95 Patentblatt 95/03

(84) Benannte Vertragsstaaten:
BE CH DE DK ES FR GB IT LI LU NL SE

(71) Anmelder: **HÜLS AKTIENGESELLSCHAFT**

**D-45764 Marl (DE)**

(72) Erfinder: **Banke, Horst, Dr.**
**In der Miere 22**
**D-46282 Dorsten (DE)**
Erfinder: **Doerk, Klaus, Dr.**
**Marcq-en-Baroeul-Strasse 120**
**D-45966 Gladbeck (DE)**
Erfinder: **Koch, Klaus, Dr.**
**Eschenbruch 6**
**D-45481 Mülheim (DE)**
Erfinder: **Schleinzer, Matthias, Dr.**
**Im Werth 39**
**D-46282 Dorsten (DE)**

(54) **Verfahren zur Herstellung von amorphen oder wenig kristallinen Co- oder Terpolymeren aus Olefinen.**

(57) Die Herstellung amorpher oder wenig kristalliner Co- oder Terpolymerer mit enger Molekulargewichtsverteilung und einem niedrigen Titan- bzw. Aschegehalt gelingt durch ein Verfahren, bei dem man 25 bis 85 Gew.-% Propen, 15 bis 75 Gew.-% eines $\alpha$-Olefins mit 4 bis 8 C-Atomen und 0 bis 20 Gew.-% Ethen in Gegenwart einer Verbindung $AlR^4_3$ mit Hilfe eines Katalysators polymerisiert, der aus

(a) einer Magnesium, Titan und Chlor enthaltenden Katalysatorkomponente und

(b) einer aluminiumorganischen Verbindung besteht,

dadurch gekennzeichnet,

daß die Katalysatorkomponente (a) hergestellt wird durch Umsetzung

(1) eines in flüssigen Kohlenwasserstoffen löslichen Komplexes aus einem Magnesiumalkoxid $Mg(OR^1)_2$ und einer Verbindung $TiCl_x(OR^2)_{4-x}$, wobei das Molverhältnis von Magnesium zu Titan 1 : 3 bis 3 : 1 beträgt, mit

(2) einer aluminiumorganischen Verbindung $AlR^3_nCl_{3-n}$.

Die erfindungsgemäß hergestellten Polymeren sind weitgehend frei von Oberflächenklebrigkeit und besitzen eine hohe Reißdehnung.

EP 0 634 426 A1

Das vorliegende Verfahren betrifft die Herstellung von amorphen oder wenig kristallinen Co- oder Terpolymeren aus Propen, einem Olefin mit 4 bis 8 C-Atomen und gegebenenfalls Ethen. Derartige Produkte finden vielfältige Anwendungen als Komponenten von plastischen Massen, die beispielsweise als Schmelzklebstoffe im Verpackungs-, Hygiene-, Möbel- und Textilsektor sowie in der Buchbinderei, als Laminierklebstoffe für mehrlagige Papiere sowie für die Kaschierung von Papier mit Kunststoff- oder Aluminiumfolien, als Palettier- und Haftschmelzklebstoff, in Kabelfüllmassen, Dämmstoffen, in Schwerbeschichtungsmassen (beispielsweise für Teppichfliesen), für die Herstellung von polymermodifizierten bituminösen Dachbahnen und für polymermodifizierten Asphalt verwendet werden.

Zur Herstellung weitgehend amorpher Poly-$\alpha$-Olefine ist eine Reihe von Verfahren bekannt. So wird in der DE-OS 29 30 108 für die Herstellung derartiger Polymerer aus Buten-1, Propen und Ethen die Verwendung eines Katalysators beschrieben, der aus einer kristallinen Verbindung $TiCl_3 \cdot 0{,}3$ bis $0{,}35$ $AlCl_3$ und einem Aluminiumtrialkyl bzw. Aluminiumdialkylhydrid besteht. Die DE-OS 23 06 667 offenbart die Verwendung eines derartigen Katalysators für die Herstellung von weitgehend amorphen Buten-1-Polymeren. Schließlich wird in der DE-OS 23 02 490 ein Verfahren zur Herstellung von plastisch-elastischen Massen durch mehrstufige Polymerisation von Olefinen an Mischkontakten aus Titanchloriden sowie Aluminiumtrialkylen oder Aluminiumdialkylhydrid beschrieben. Ein weiteres Verfahren, bei dem ein $TiCl_3$-Katalysator eingesetzt und bei 140 - 250 °C polymerisiert wird, ist in der EP-A-0 226 112 offenbart.

Alle diese Verfahren sind jedoch mit Mängeln behaftet. Hohe Gehalte der Katalysatoren an aktivem Chlor bewirken im Zuge der Kontaktzersetzung die Bildung großer Mengen an Hydrogenchlorid oder Chloriden, so daß Anlagenteile schnell korrodieren. Ganz allgemein führen die im Polymer verbleibenden Katalysatorrückstände zu hohen Asche- und Chlorgehalten der Produkte. Diese haben wiederum unerwünschte Auswirkungen auf die Produkteigenschaften. So sind die Aschereste und ein hoher Chlorwert ursächlich mit verantwortlich für eine schlechte Farb- und Viskositätsstabilität bei Lagerung der Polymerschmelzen an Luft. Bei einer viertägigen Schmelzelagerung an Luft bei 180 °C ist ein Viskositätsabfall von 50 % bei herkömmlichen amorphen Polyalphaolefinen nicht unüblich. Der Viskositätsabfall führt im Schmelzklebstoffsektor zu schwankenden Förderleistungen der Pumpen von Auftraggeräten und geht einher mit einer zunehmenden Braunverfärbung der Schmelze, einer Hautbildung und nachfolgender Ausbildung schwarzer Crackprodukte. Zur Kompensation dieser negativen Effekte ist daher die Zugabe teurer Stabilisatoren (z. B. sterisch gehinderter Phenole, Chlorakzeptoren, Thioether) erforderlich.

Grundsätzlich führen hohe Gehalte an Katalysatorresten darüber hinaus zu Filterverstopfungen und Belägen an den Verarbeitungsmaschinen der Endverbraucher. Dies gilt insbesondere, wenn sie nicht fein verteilt, sondern agglomeriert in Form von Stippen vorliegen. Auf Grund ihrer katalytischen Wirkung beschleunigen Katalysatorreste darüber hinaus die Bildung schwarzer Crackprodukte bei Anwesenheit von Luftsauerstoff und können dadurch Düsenverstopfungen verursachen.

Eine bessere Katalysatoraktivität wird erhalten, wenn der Katalysator eine Magnesiumverbindung enthält. So läßt sich beispielsweise gemäß der EP-A-0 251 771 durch gemeinsames Zerkleinern von Magnesiumchlorid und Aluminiumchlorid und anschließendes gemeinsames Zerkleinern des Produkts mit Titantetrachlorid eine Katalysatorkomponente erhalten, die für die Herstellung von amorphen Copolymeren aus $\alpha$-Olefinen geeignet ist. Ähnliche Verfahren sind in den DE-OSS 30 07 419 und 30 33 561 sowie den Anmeldungen EP-A-0 232 201, EP-A-0 251 771, EP-A-0 329 319, EP-A-0 335 484 und WO 89/01951 beschrieben.

Allerdings weisen die nach dem bisherigen Stand der Technik erhaltenen Produkte breite Molekulargewichtsverteilungen auf. Dadurch bedingt enthalten sie einen relativ hohen Anteil an Oligomeren, die ausschwitzen und zu einer unerwünschten Klebrigkeit der Oberflächen führen. Aus solchen Polymeren hergestellte Granulate sind daher nicht voll rieselfähig und mit herkömmlichen Dosiersystemen nicht dosierbar, es sei denn, sie werden in einem aufwendigen zweiten Schritt mit einem Trennmittel nachgepudert.

In lebensmittelrechtlicher Sicht führen die oligomeren Bestandteile im allgemeinen zu einer nicht akzeptablen Migration ins Lebensmittel, so daß ein direkter Kontakt mit solchen oft nicht in Frage kommt und große potentielle Märkte somit nicht erreichbar sind. Darüber hinaus setzen oligomere Bestandteile die Reißfestigkeit, Wärmestandfestigkeit und Kristallisationsgeschwindigkeit der Polymere oder daraus hergestellter Schmelzklebstoffe herab. In Schmelzklebstoffen führen die Oligomere außerdem im Zuge der Langzeitalterung zu einer Verschlechterung der Adhäsion und damit häufig zu einem frühzeitigen Versagen des Verbundes. Wegen der gleichen Ursache scheitert eine Überlackierung der herkömmlich synthetisierten Polymere an einer mangelnden Haftung des Lackfilms.

Hinzu kommt, daß herkömmliche, weitgehend amorphe Poly-$\alpha$-Olefine aufgrund ihrer rheologischen Eigenschaften beim Versprühen zu keinem gleichmäßigen Sprühbild führen. Sie besitzen nämlich eine ausgeprägte Strukturviskosität und damit kein Newtonsches Fließverhalten. Eine praktikable Abhilfe kann hier nur durch Verengung der Molekulargewichtsverteilung erreicht werden.

In der DE-OS 23 29 641 wird ein Verfahren zur Polymerisation bzw. Mischpolymerisation von α-Olefinen beschrieben, bei dem ein Mischkatalysator verwendet wird, der aus dem Reaktionsprodukt bestimmter Titan- und Magnesiumverbindungen sowie chlorhaltigen aluminiumorganischen Verbindungen zusammengesetzt ist. Das unlösliche, nicht reduzierte Reaktionsprodukt aus Titan- und Magnesiumverbindung wird zusammen mit dem Alkylaluminiumchlorid in die Polymerisationsreaktion eingesetzt; letzteres dient sowohl als Reduktionsmittel für die Titankomponente als auch als Aktivator für die Polymerisation. Die Kontaktausbeuten sind relativ gering; aus den Beispielen geht eine Spanne von 160 bis 1000 g Polymeres pro mmol Titan hervor. Damit ist der Titan- und Aschegehalt im Produkt nicht akzeptabel. Darüber hinaus liegt eine breite Molekulargewichtsverteilung vor, und entsprechend hergestellte Co- und Terpolymere weisen eine nicht akzeptable Oberflächenklebrigkeit auf.

Das Verfahren der DE-OS 23 29 641 besitzt weiterhin den Nachteil, daß bei relativ hohen Temperaturen, nämlich zwischen 100 °C und 160 °C, polymerisiert werden muß. Dies ist aus zweierlei Gründen unerwünscht: zum einen verliert der verwendete Katalysator bei hohen Temperaturen wegen thermischer Schädigung seine Aktivität zu schnell. Zum anderen bauen sich in den Fällen, in denen niedrigsiedende Lösemittel wie z. B. n-Butan verwendet werden, während der Polymerisation hohe Drucke auf, was eine aufwendige Druckauslegung erforderlich macht. Die Verwendung niedrigsiedender Lösemittel ist wegen ihrer leichten Entfernung bei der anschließenden Aufarbeitung jedoch generell wünschenswert.

Schließlich geht aus der DE-OS 29 06 639 ein Verfahren zur Herstellung von weitgehend amorphen Homo- bzw. Copolymerisaten von α-Olefinen hervor, bei dem als Katalysator ein Umsetzungsprodukt aus einem gemischten, Titan und Magnesium enthaltenden μ-Oxoalkoxid sowie einer halogenhaltigen aluminiumorganischen Verbindung verwendet wird. Dieses Umsetzungsprodukt wird bei der Polymerisation zusammen mit einem Aluminiumtrialkyl als Aktivator eingesetzt. Auch hier sind die Kontaktausbeuten relativ gering; den Beispielen kann eine Spanne von 13 bis 1 240 g Polymeres pro mmol Titan entnommen werden. Die Erfahrung zeigt, daß dermaßen hergestellte Copolymerisate eine breite Molekulargewichtsverteilung besitzen. Zudem sind die Produkte für die üblichen Zwecke zu amorph. Ein weiterer Nachteil dieses Verfahrens ist, daß die Kontaktherstellung viel zu aufwendig ist.

In den Vergleichsbeispielen dieser Schrift werden anstelle des Oxoalkoxids verschiedene Mischungen aus Titantetrabutylat und Magnesiumethoxid eingesetzt. Dadurch sinkt die Kontaktausbeute auf 1 bis 107 g Polymeres pro mmol Titan. Dies stellte keine Ermutigung dar, diesen Weg weiter zu verfolgen.

Es bestand daher weiterhin die Aufgabe, ein Verfahren zur Herstellung weitgehend amorpher Co- oder Terpolymerer aus Propen, einem α-Olefin mit 4 bis 8 C-Atomen und gegebenenfalls Ethen aufzufinden, das es gestattet, Produkte mit einem niedrigen Katalysator- bzw. Aschegehalt herzustellen, die gleichzeitig eine enge Molekulargewichtsverteilung aufweisen und daher weitgehend frei von Oberflächenklebrigkeit sind sowie eine hohe Reißfestigkeit besitzen. Zusätzlich sollte ein derartiges Verfahren die Polymerisation derartiger Monomerer bei möglichst niedriger Temperatur gestatten, sodaß ohne aufwendige Druckauslegung des Reaktors gearbeitet werden kann.

Diese Aufgabe wurde durch ein Verfahren zur Herstellung von amorphen oder wenig kristallinen Co- oder Terpolymeren aus 25 bis 85 Gew.-% Propen und 15 bis 75 Gew.-% eines α-Olefins mit 4 bis 8 C-Atomen sowie gegebenenfalls bis zu 20 Gew.-% Ethen gelöst, bei dem man die infragekommenden Olefine mit Hilfe eines Katalysators polymerisiert, der aus

(a) einer Magnesium, Titan und Chlor enthaltenden Katalysatorkomponente und
(b) einer aluminiumorganischen Verbindung besteht,

dadurch gekennzeichnet, daß die Magnesium, Titan und Chlor enthaltende Katalysatorkomponente hergestellt wird durch Umsetzung

(1) eines in flüssigen Kohlenwasserstoffen löslichen Komplexes aus

(1.1) einem Magnesiumalkoxid der allgemeinen Formel $Mg(OR^1)_2$, in der $R^1$ einen Alkylrest mit zwei bis zehn Kohlenstoffatomen bedeutet, und

(1.2) einer Verbindung des vierwertigen Titans der allgemeinen Formel $TiCl_x(OR^2)_{4-x}$, in der $R^2$ gleiche oder verschiedene Alkylreste mit 2 bis 20 C-Atomen und x eine Zahl von 0 bis 2 bedeutet, wobei das Molverhältnis von Magnesium zu Titan 1 : 3 bis 3 : 1 beträgt, mit

(2) einer aluminiumorganischen Verbindung der allgemeinen Formel $AlR^3_nCl_{3-n}$, in der $R^3$ einen Alkylrest mit 2 bis 10, vorzugsweise 2 bis 4 C-Atomen und n eine Zahl von 1,0 bis 2,0 bedeutet,

der so erhaltene Feststoff abgetrennt wird und mit einer Trialkylaluminiumverbindung der allgemeinen Formel $AlR^4_3$ aktiviert wird, in der $R^4$ einen Alkylrest mit 2 bis 10, vorzugsweise 2 bis 4 C-Atomen bedeutet.

Ein entsprechendes Katalysatorsystem wird in der DE-OS 22 59 516 zur Polymerisation und Copolymerisation von α-Olefinen verwendet, wobei der Einsatz von Ethen besonders bevorzugt ist. Das Verfahren der DE-OS 22 59 516 ermöglicht die Herstellung von Polyolefinen mit merklich gesteigerten Produktivitäten, wobei sich die nach diesem Verfahren erhaltenen Polyolefine durch eine bemerkenswert erhöhte Schlagzähigkeit auszeichnen. Die Schrift gibt keinen Hinweis darauf, daß dieses Katalysatorsystem für die Herstellung von weitgehend amorphen Co- oder Terpolymeren aus Propen, einem höheren α-Olefin sowie gegebenenfalls geringen Mengen Ethen geeignet sein könnte. Sie läßt auch nicht erwarten, daß bei Verwendung dieses Monomerengemisches der Einbau der Monomeren in die wachsende Polymerkette unter Verwendung dieses Katalysatorsystems mit der genau passenden Taktizität erfolgt. Schließlich konnte der Fachmann anhand dieser Schrift nicht davon ausgehen, daß das dort beschriebene Katalysatorsystem im Falle der hier beanspruchten Co- und Terpolymeren eine enge Molekulargewichtsverteilung ergibt, die zu verringerter Oberflächenklebrigkeit und verbesserter Reißdehnung führt.

Die EP-A-0 000 007 stellt eine Weiterentwicklung der DE-OS 22 59 516 dar. Auch hier wird ein der vorliegenden Erfindung entsprechendes Katalysatorsystem zur Polymerisation insbesondere von Ethylen verwendet. Es wird hervorgehoben, daß man ein Polyolefin mit einer breiten Molekulargewichtsverteilung erhält.

Es war daher vollkommen überraschend, daß nach dem erfindungsgemäßen Verfahren Co- oder Terpolymere der anspruchsgemäßen Zusammensetzung erhalten werden, die die gewünschte enge Molekulargewichtsverteilung aufweisen.

Im folgenden soll die Erfindung näher erläutert werden.

Unter amorphen oder wenig kristallinen Co- oder Terpolymeren werden im Rahmen der vorliegenden Erfindung Produkte verstanden, die eine Heptanlöslichkeit von mehr als 50 Gewichtsprozent, bevorzugt mehr als 90 Gewichtsprozent und besonders bevorzugt mehr als 98 Gewichtsprozent, besitzen. Als weiteres Maß für den amorphen Charakter kann die Löslichkeit in Diethylether herangezogen werden. Der etherunlösliche Anteil sollte bei den nach dem erfindungsgemäßen Verfahren hergestellten Produkten zwischen 5 und 75 Gewichtsprozent und bevorzugt zwischen 10 und 50 Gewichtsprozent betragen.

Die heptan- bzw. etherlöslichen Anteile der Polymerisate werden dabei nach 16stündiger Extraktion der Proben im Soxhlet und anschließender Trocknung und Auswägung des Rückstandes bestimmt.

Das als Comonomer verwendete α-Olefin mit 4 bis 8 C-Atomen kann beispielsweise Buten-1, Penten-1, Hexen-1, 4-Methylpenten-1, Hepten-1 oder Octen-1 sein. Es können auch Gemische dieser α-Olefine eingesetzt werden. Die Verwendung von Buten-1 ist, hauptsächlich aus Gründen der Verfügbarkeit, bevorzugt.

Als Magnesiumalkoxid können beispielsweise Magnesiumethoxid, Magnesiumpropoxid, Magnesium-n-butoxid, Magnesium-isobutoxid, Magnesium-t-butoxid, Magnesium-isopentoxid, Magnesium-n-hexoxid, Magnesium-n-octoxid, Magnesium-isooctoxid und Magnesium-n-decoxid verwendet werden. Selbstverständlich können auch gemischte Alkoxide eingesetzt werden. Bevorzugt werden Magnesiumethoxid, Magnesiumpropoxid und/oder Magnesium-n-butoxid verwendet.

Als Verbindung $TiCl_x(OR^2)_{4-x}$ können beispielsweise Ethyltitanat, n-Propyltitanat, Isopropyltitanat, n-Butyltitanat, Isobutyltitanat, 2-Ethylhexyltitanat, n-Nonyltitanat, Cetyltitanat, Stearyltitanat, Chlortri-n-butyltitanat, Dichlordi-n-butyltitanat, Chlortristearyltitanat und Dichlordistearyltitanat verwendet werden.

In einer bevorzugten Ausführungsform ist x eine Zahl von 0 bis 1, wobei x gleich 0 besonders bevorzugt ist. Ganz besonders bevorzugt ist x gleich 0 und $R^2$ gleich Alkyl mit 2 bis 9 C-Atomen.

Die einzige Voraussetzung für die Verwendung chlorhaltiger Titanverbindungen besteht darin, daß das Umsetzungsprodukt mit dem Magnesiumalkoxid in flüssigen Kohlenwasserstoffen löslich ist. Die Löslichkeit dieser Umsetzungsprodukte nimmt einerseits mit steigendem Chlorgehalt ab, andererseits mit steigender C-Zahl der Alkoxygruppen zu.

Die chlorhaltigen Titanverbindungen können gemäß dem Stand der Technik durch Mischen von Titanverbindungen verschiedener Chlorierungsgrade erhalten werden, z. B. durch Mischen von Tetraalkyltitanat mit Titantetrachlorid. Damit können auch nicht ganzzahlige Werte für x eingestellt werden. Besonders einfach wird das Mischen derartiger Titanverbindungen in Gegenwart des Magnesiumalkoxids durchgeführt.

In einer bevorzugten Ausführungsform beträgt das Molverhältnis von Magnesium zu Titan 3 : 1 bis 1 : 1.

Als Verbindung $AlR^3_nCl_{3-n}$ können beispielsweise Ethylaluminiumdichlorid, n-Propylaluminiumdichlorid, Isopropylaluminiumdichlorid, n-Butylaluminiumdichlorid, Isobutylaluminiumdichlorid, t-Butylaluminiumdichlorid, n-Hexylaluminiumdichlorid,n-Octylaluminiumdichlorid, Isooctylaluminiumdichlorid, n-Nonylaluminiumdichlorid, n-Decylaluminiumdichlorid, Diethylaluminiumchlorid, Di-n-propylaluminiumchlorid, Diisopropylaluminiumchlorid, Di-n-butylaluminiumchlorid, Diisobutylaluminiumchlorid, Di-t-butylaluminiumchlorid, Di-n-hexylaluminiumchlorid, Di-n-octylaluminiumchlorid, Diisooctylaluminiumchlorid, Di-n-nonylaluminiumchlorid und Di-n-decylaluminiumchlorid oder ihre Mischungen verwendet werden. Derartige Verbindungen können gemäß dem Stand der Technik durch Mischen von Aluminiumverbindungen verschiedener Chlorierungsgrade erhalten werden, z. B. durch Mischen von Aluminiumtrialkyl mit Aluminiumtrichlorid. Damit können auch nicht ganzzahlige Werte für n eingestellt werden. In einer bevorzugten Ausfuhrungsform liegt n im Bereich von 1 bis 1,5. Weiterhin ist die Verwendung von Ethyl und Isobutyl als Substituent $R^3$ bevorzugt.

Der erfindungsgemäß verwendete kohlenwasserstofflösliche Magnesium-Titan-Komplex wird durch die Umsetzung des Magnesiumalkoxids $Mg(OR^1)_2$ mit der Titanverbindung $TiCl_x(OR^2)_{4-x}$ bei erhöhten Temperaturen erhalten. Die Reaktionstemperatur ist nicht kritisch; sie sollte zweckmäßigerweise im Bereich von 120 - 190 °C liegen. Die Reaktion erfolgt hierbei unter Rühren, bis sich eine homogene Phase gebildet hat. Nach Abkühlung wird die viskose Flüssigkeit für die weitere Verwendung in einem bei Raumtemperatur flüssigen Kohlenwasserstoff wie z. B. Hexan oder Cyclohexan gelöst.

Aus diesem Komplex wird die Magnesium, Titan und Chlor enthaltende Katalysatorkomponente hergestellt, indem dessen Lösung in einem flüssigen Kohlenwasserstoff mit einer Verbindung $AIR^3{}_nCl_{3-n}$, die beispielsweise ebenfalls in einem flüssigen Kohlenwasserstoff gelöst ist, umgesetzt wird. Bevorzugt wird hierbei mit einem Molverhältnis von Al/(Mg + Ti) von 2,0 bis 5,0 gearbeitet. Die Temperatur liegt im Bereich von 0 °C bis 120 °C, vorzugsweise im Bereich von 20 °C bis 85 °C. Hierbei fällt ein Feststoff aus, der abgetrennt und mit einem flüssigen Kohlenwasserstoff solange gewaschen wird, bis im Filtrat kein Titan mehr nachweisbar ist.

Zur Verwendung als Polymerisationskatalysator wird dieser Feststoff in einem flüssigen Kohlenwasserstoff suspendiert und durch die Zugabe eines Cokatalysators der Formel $AIR^4{}_3$ aktiviert. Beispielhaft können hierbei Triethylaluminium, Tri-n-propylaluminium, Triisopropylaluminium, Tri-n-butylaluminium, Triisobutylaluminium, Tri-n-hexylaluminium, Tri-n-octylaluminium, Triisooctylaluminium, Tri-n-nonylaluminium, Tri-n-decylaluminium oder deren Mischungen verwendet werden. Mit Triethylaluminium als Cokatalysator werden härtere Produkte erhalten als mit Triisobutylaluminium. Um die Eigenschaften der Polymerisate wie z. B. die Penetration und den Erweichungspunkt bei gegebener Zusammensetzung zu variieren, kann hierbei ein Elektronendonor zugesetzt werden. Grundsätzlich ist jeder Elektronendonor, der bei ähnlichen Polymerisationsverfahren Stand der Technik ist, geeignet. Vorzugsweise wird jedoch ein Alkyl- oder Cycloalkylalkoxysilan der Formel $R^5{}_mSi(OR^6)_{4-m}$ verwendet, wobei $R^5$ einen aliphatischen oder cycloaliphatischen Rest mit 1 bis 6 C-Atomen bedeutet, m gleich 1 oder 2 sein kann und $R^6$ ein Alkylrest mit maximal 6 C-Atomen ist. Beispielsweise können folgende Silane verwendet werden: n-Propyltrimethoxysilan, n-Propyltriethoxysilan, Isobutyltrimethoxysilan, Diisobutyldimethoxysilan, Isopropyltrimethoxysilan, n-Butyltriethoxysilan, Cyclohexylmethyldimethoxysilan und n-Butylcyclohexyldimethoxysilan.

Üblicherweise werden diese Silane im Molverhältnis $AIR^4{}_3$ : Si gleich 20 : 1 bis 200 : 1 zugesetzt. Es hat sich gezeigt, daß durch den Silanzusatz die Kristallinität des Co- oder Terpolymeren erhöht wird. Damit steigen Härte und Erweichungspunkt, während die Löslichkeit sinkt. Allerdings ist zu beachten, daß in Anwesenheit eines Silans die Katalysatoraktivität schlechter ist.

Die Polymerisation kann kontinuierlich oder diskontinuierlich durchgeführt werden. Als Lösemittel kann hierbei ein Kohlenwasserstoff wie Isobutan, n-Butan, n-Pentan, n-Hexan oder ein Benzinschnitt verwendet werden. Alternativ hierzu können auch die verflüssigten Monomeren als Lösemittel verwendet werden. Man kann aber auch ohne Lösemittel polymerisieren, was bei hoher Polymerisationstemperatur bzw. bei Herstellung eines niedrigviskosen Polymeren von Vorteil sein kann. Die Polymerisationstemperatur kann zwischen 30 und 250 °C liegen. Vorzugsweise liegt sie zwischen 40 und 150 °C, besonders bevorzugt zwischen 80 und 110 °C.

Die Regelung des Molekulargewichts kann in bekannter Weise vorteilhaft durch Zugabe von Wasserstoff zum Monomerengemisch erfolgen. Jedoch kann im Prinzip auch jedes andere bekannte Verfahren zur Molekulargewichtsregelung verwendet werden. Das erhaltene Polymerisat wird mit Vorteil über einen Verdampfer aufgearbeitet, um Lösemittel bzw. Monomerreste zu entfernen.

Die so erhaltenen Polymerisate weisen einen sehr niedrigen Titan- und Aschegehalt auf. Darüber hinaus besitzen sie eine enge Molekulargewichtsverteilung und enthalten somit kaum Oligomere, die zu Schmierfilmen an der Oberfläche oder zu Klebrigkeit führen. Die Reißfestigkeit und die Versprühbarkeit sind im Vergleich mit Produkten des Standes der Technik sehr gut. Bevorzugte Polymerisate weisen hierbei eine Uneinheitlichkeit, definiert durch die Formel $U = M_w/M_n - 1$ von maximal 4 auf.

In den nachfolgenden Beispielen und Vergleichsbeispielen soll das erfindungsgemäße Verfahren näher erläutert werden.

Die erfindungsgemäß hergestellten Produkte wurden hierbei durch folgende Messungen charakterisiert:

1) $^{13}$NMR-Analyse (Gew.-% der eingebauten Monomeren).

2) Schmelzviskosität (mPa • s), gemessen bei 190 °C mit einem Rotationsviskosimeter (Rheomat 15 der Fa. Contraves).

3) Viskositätszahl J ($cm^3/g$) nach DIN 53 728 in Decalin (5 g/l) bei 135 °C.

4) Erweichungspunkt (°C) nach der Ring- und Kugelmethode (R u. K) gemäß DIN 52 011.

5) Penetration 100/25/5 (0,1 mm) in Anlehnung an DIN 52 010.

6) Zugversuch nach DIN 53 455, Stab 4:

Streckspannung (N/mm$^2$)

Zugfestigkeit (N/mm$^2$)

Reißfestigkeit (N/mm$^2$)

Dehnung bei Streckspannung (%)

Reißdehnung (%)

7) GPC-Analyse: Molmassenverteilung durch Gelpermeationschromatographie. Verwendet wurde die Säulenkombination Zorbax PSM 60, Zorbax PSM 300, Zorbax PSM 3 000 und Zorbax PSM 3 000, in Reihe geschaltet. Lösungsmittel 1,2,4-Trichlorbenzol, Temperatur 150 °C, Kalibrierung über IPP-Polymerstandards.

Beispiel 1

a) Katalysatorherstellung:

Eine Mischung von 11,4 g Magnesiumethoxid und 17,0 ml n-Butyltitanat wurde unter Stickstoff eine Stunde unter Rühren auf 190 °C erhitzt. Dabei löste sich das Magnesiumethoxid auf. Während des Abkühlens des Gemisches wurden im Bereich von 80 - 100 °C unter Rühren 50 ml Cyclohexan zugetropft, wobei sich ein Rückfluß einstellte. Nach dem Abkühlen auf Raumtemperatur wurde die erhaltene Lösung durch weitere Zugabe von Cyclohexan auf ein Volumen von 100 ml gebracht. Der Ti-Gehalt der Lösung wurde zu 22,3 g/l bestimmt, der Mg-Gehalt zu 23,9 9/l.

21,6 ml dieser Lösung wurden unter Stickstoff mit 78,4 ml Cyclohexan versetzt. Dazu wurden unter Erhitzen zum Rückfluß und Rühren mit einer Drehzahl von 300 min$^{-1}$ im Laufe von 2 Stunden 69,5 ml einer 1,438-molaren Lösung von Isobutylaluminiumdichlorid in Cyclohexan getropft. Die Temperatur des Reaktionsmediums betrug dabei 79 - 82 °C. Die erhaltene Suspension wurde noch 2 Stunden bei gleicher Rührerdrehzahl unter Rückfluß erhitzt. Nach dem Abkühlen wurde der gebildete Katalysatorfeststoff abgetrennt und mit Hexanschnitt gewaschen. Er wurde in Hexanschnitt suspendiert und in dieser Form zur Polymerisation eingesetzt.

Der Katalysatorfeststoff enthielt 12,5 Gew.-% Ti, 10,6 Gew.-% Mg, 2,7 Gew.-% Al und 58,9 Gew.-% Cl.

b) Polymerisation:

In einen 5-l-Stahlautoklaven wurden unter Stickstoff 800 ml flüssiges n-Butan eingefüllt. Zur Entfernung des Stickstoffs wurden 4 l Gas entspannt. Anschließend wurden 230 g Buten-1 und 570 g Propen in den Autoklaven gedrückt. Ein Wasserstoffpartialdruck von 2,0 bar wurde eingestellt und der Autoklaveninhalt aufgeheizt. Bei Erreichen von 70 °C wurde eine Mischung aus 18 ml einer 2 mmol Triethylaluminium enthaltenden Lösung in Hexanschnitt und 2,9 ml einer Suspension in Hexanschnitt, enthaltend 40 mg des oben hergestellten Katalysatorfeststoffs, über eine Schleuse in den Autoklaven abgelassen. Dann wurde unter Rühren mit einer Drehzahl von 1 000 min$^{-1}$ bei 90 °C 5 Stunden lang polymerisiert. Anschließend wurde zur Zersetzung der Katalysatorreste und Stabilisierung des Copolymerisats eine Lösung von 1,6 g Irganox® 1010 (CIBA GEIGY) in 1,8 ml n-Propanol in den Autoklaven abgelassen. Nach Abdampfen des Verdünnungsmittels n-Butan und nicht umgesetzter Olefine wurde der Rückstand bei ca. 160 °C unter Stickstoff aufgeschmolzen und die Schmelze durch eine Öffnung im Boden des Autoklaven in eine Schale abgelassen.

Ausbeute: 655 g

Produktivität: 6,3 kg Copolymerisat/mmol Ti

| | |
|---|---|
| NMR-Analyse des Copolymerisates [Gew.-%] | C$_3$ 74,5; C$_4$ 25,5 |
| Schmelzviskosität 190 °C [mPa • s] | 7 800 bei einer Schergeschwindigkeit von 28,3 s$^{-1}$ |
| Viskositätszahl J [cm$^3$/g] | 55 |
| Erweichungspunkt R u. K [°C] | 134 |
| Penetration 100/25/5 [1/10 mm] | 12 |
| GPC-Analyse | U = 2,7; $\overline{M}_w$ = 51 000, $\overline{M}_v$ = 45 000, $\overline{M}_n$ = 14 000 |
| Etherunlöslicher Anteil [Gew.-%] | 34,0 |

Vergleichsbeispiel 1

a) Katalysatorherstellung gemäß Beispiel 1 der DE-OS 23 29 641: 8,55 g Magnesiumethoxid (0,075 mol) wurden in 50 ml getrocknetem Paraffinöl suspendiert. Dazu wurde unter Rühren bei 100 °C innerhalb von 20 Minuten eine Mischung aus 16,5 ml $TiCl_4$ (28,55 g = 0,15 mol) und 20 ml Paraffinöl zugetropft und noch eine Stunde bei 100 °C gerührt. Anschließend wurde der sich absetzende Niederschlag durch Dekantieren und 10maliges Verrühren mit insgesamt 300 ml Hexan gewaschen. Nach dem letzten Waschen war die Hexanphase frei von Titan-Verbindungen. Der größte Teil der Niederschlages wurde mit Hexan auf ein Volumen von 200 ml suspendiert.

| Feststoff: | 41 g/l |
|---|---|
| Ti: | 3,41 g/l |

b) Polymerisation

In einen 5-l-Stahlautoklaven wurden unter Stickstoff 800 ml n-Butan eingefüllt und 4 l Gas entspannt. 115 g Buten-1 und 285 g Propen sowie 2 bar Wasserstoff wurden aufgedrückt. Der Autoklaveninhalt wurde auf 115 °C aufgeheizt und eine Mischung aus 0,4 ml Diethylaluminiumchlorid-Lösung, enthaltend 0,52 mmol Al sowie 1,47 ml der obigen Suspension (0,104 mmol Ti-Komponente) wurden über eine Schleuse in den Autoklaven abgelassen. Der Autoklaveninhalt wurde dann unter Rühren (1 000 $min^{-1}$) 5 Stunden auf 115 ± 2 °C gehalten.

Anschließend wurde wie im Beispiel 1 weitergearbeitet. Es stellte sich dabei heraus, daß praktisch kein Umsatz stattgefunden hatte. Es wurden weniger als 1 g stark katalysatorhaltiges Produkt erhalten, auf dessen nähere Charakterisierung verzichtet wurde.

Von einem erneuten Polymeriationsversuch bei noch höherer Temperatur wurde abgesehen, da die Druckauslegung des verwendeten Autoklaven hierfür nicht ausreichte.

Beispiel 2

Es wurde wie bei Beispiel 1 verfahren. Zusätzlich wurden zusammen mit dem Katalysatorfeststoff und dem Cokatalysator dem Polymerisationsansatz 0,05 mmol Cyclohexylmethyldimethoxysilan als 0,1 molare Lösung in Hexanschnitt zugesetzt.
Ausbeute: 579 g
Produktivität: 5,6 kg Copolymerisat/mmol Ti

| NMR-Analyse des Copolymerisates [Gew.-%] | $C_3$ 78,4; $C_4$ 21,6 |
|---|---|
| Schmelzviskosität 190 °C [mPa • s] | 21 000 bei einer Schergeschwindigkeit von 3,31 $s^{-1}$ |
| Viskositätszahl J [$cm^3$/g] | 66 |
| Erweichungspunkt R u. K [°C] | 138 |
| Penetration 100/25/5 [1/10 mm] | 5 |
| GPC-Analyse | U = 3,0; $\overline{M}_w$ = 63 000, $\overline{M}_v$ = 55 000, $\overline{M}_n$ = 15 800 |
| Etherunlöslicher Anteil [Gew.-%] | 49,6 |

Beispiel 3

Es wurde wie bei Beispiel 1 verfahren. Davon abweichend wurden anstelle von 570 g Propen 525 g Propen und anstelle von 230 g 275 g Buten-1 eingesetzt und Triisobutylaluminium anstelle von Triethylaluminium als Cokatalysator verwendet.
Ausbeute: 748 g
Produktivität: 7,2 kg Copolymerisat/mmol Ti

| NMR-Analyse des Copolymerisates [Gew.-%] | $C_3$ 68,8; $C_4$ 53,0 |
|---|---|
| Schmelzviskosität 190 °C [mPa $\cdot$ s] | 5 500 bei einer Schergeschwindigkeit von 28,4 $s^{-1}$ |
| Viskositätszahl J [$cm^3$/g] | 48 |
| Erweichungspunkt R u. K [°C] | 127 |
| Penetration 100/25/5 [1/10 mm] | 16 |
| GPC-Analyse | U = 2,7; $\overline{M}_w$ = 42 000, $\overline{M}_v$ = 37 000, $\overline{M}_n$ = 11 300 |
| Etherunlöslicher Anteil [Gew.-%] | 26,5 |

Beispiel 4

Es wurde wie nach Beispiel 3 verfahren. Zusätzlich wurde dem Polymerisationsansatz 0,05 mmol Cyclohexylmethyldimethoxysilan als 0,1 molare Lösung mit dem Katalysatorfeststoff und dem Cokatalysator zugesetzt. Außerdem wurde der Wasserstoffpartialdruck von 2,0 auf 2,5 bar angehoben.
Ausbeute: 733 g
Produktivität: 7,0 kg Copolymerisat/mmol Ti

| NMR-Analyse des Copolymerisates [Gew.-%] | $C_3$ 71,9; $C_4$ 28,1 |
|---|---|
| Schmelzviskosität 190 °C [mPa $\cdot$ s] | 8 000 bei einer Schergeschwindigkeit von 28,3 $s^{-1}$ |
| Viskositätszahl J [$cm^3$/g] | 58 |
| Erweichungspunkt R u. K [°C] | 136 |
| Penetration 100/25/5 [1/10 mm] | 6 |
| GPC-Analyse | U = 3,1; $\overline{M}_w$ = 47 000, $\overline{M}_v$ = 41 000, $\overline{M}_n$ = 11 500 |
| Etherunlöslicher Anteil [Gew.-%] | 43,8 |

Beispiel 5

Es wurde wie bei Beispiel 4 verfahren. Davon abweichend wurden 490 g anstelle von 525 g Propen und 310 g anstelle von 275 g Buten-1 eingesetzt und 0,025 mmol Cyclohexylmethyldimethoxysilan anstelle von 0,050 mmol. Als Wasserstoffpartialdruck wurde 1,5 anstelle von 2,5 bar angewandt.
Ausbeute: 698 g
Produktivität: 6,7 kg Copolymerisat/mmol Ti

| NMR-Analyse des Copolymerisates [Gew.-%] | $C_3$ 72,5; $C_4$ 27,5 |
|---|---|
| Schmelzviskosität 190 °C [mPa $\cdot$ s] | 23 000 bei einer Schergeschwindigkeit von 3,26 $s^{-1}$ |
| Viskositätszahl J [cm /g] | 69 |
| Erweichungspunkt R u. K [°C] | 136 |
| Penetration 100/25/5 [1/10 mm] | 6 |
| GPC-Analyse | U = 2,7; $\overline{M}_w$ = 57 000, $\overline{M}_v$ = 50 000, $\overline{M}_n$ = 15 400 |

Beispiel 6

In einen 5-l-Stahlautoklaven wurden unter Stickstoff 800 ml n-Butan eingefüllt. Zum Entfernen des Stickstoffs wurden 4 l Gas entspannt. Anschließend wurden 490 g Propen und 310 g Buten-1 in den Autoklaven gedrückt. Ein Wasserstoffpartialdruck von 1,5 bar wurde eingestellt und der Autoklaveninhalt auf 90 °C aufgeheizt. Bei Erreichen von 70 °C wurde eine Mischung aus 18 ml einer 2 mmol Triethylaluminium enthaltenden Lösung in Hexanschnitt und 4,4 ml einer Suspension in Hexanschnitt, enthaltend 60 mg nach Beispiel 1 hergestellten Katalysatorfeststoff über eine Schleuse in den Autoklaven abgelassen. Es wurde unter Rühren mit einer Drehzahl von 1 000 $min^{-1}$ aufgeheizt. Bei Erreichen von 90 °C wurden innerhalb von 66 Minuten 65 g Ethen in den Autoklaven gedrückt. Nach 2 Stunden bei 90 °C und Rühren mit einer Rührerdrehzahl von 1 000 $min^{-1}$ wurde die Copolymerisation durch Zugabe von 1,8 ml n-Propanol abgebrochen, welches zur Stabilisierung 1,6 g Irganox® 1010 gelöst enthielt. Dann wurde verfahren, wie unter Beispiel 1 beschrieben.

Ausbeute: 721 g
Produktivität: 4,6 kg Copolymerisat/mmol Ti

| NMR-Analyse des Copolymerisates [Gew.-%] | $C_2$ 6,1; $C_3$ 65,9; $C_4$ 28,0 |
|---|---|
| Schmelzviskosität 190 °C [mPa • s] | 10 000 bei einer Schergeschwindigkeit von 28,4 $s^{-1}$ |
| Viskositätszahl J [cm /g] | 57 |
| Erweichungspunkt R u. K [°C] | 116 |
| Penetration 100/25/5 [1/10 mm] | 34 |
| GPC-Analyse | U = 3,6; $\overline{M}_w$ = 40 000, $\overline{M}_v$ = 35 000, $\overline{M}_n$ = 8 700 |
| Etherunlöslicher Anteil [Gew.-%] | 18,1 |

Beispiel 7

Es wurde wie bei Beispiel 6 verfahren. Davon abweichend wurden anstelle von 490 g 510 g Propen, 290 g anstelle von 310 g Buten-1 und zusätzlich 35 g Ethen in den Autoklaven gedrückt. Dauer der Ethenzugabe: 59 Minuten. Abbruch der Copolymerisation nach 60 Minuten durch Zugabe von 1,8 ml n-Propanol, in welchem zur Stabilisierung des Polymerisates 1,6 g Irganox® 1010 gelöst war.

Ausbeute: 528 g
Produktivität: 3,6 kg Copolymerisat/mmol Ti

| NMR-Analyse des Copolymerisates [Gew.-%] | $C_2$ 7,0; $C_3$ 70,9; $C_4$ 22,1 |
|---|---|
| Schmelzviskosität 190 °C [mPa • s] | 7 600 bei einer Schergeschwindigkeit von 28,3 $s^{-1}$ |
| Viskositätszahl J [cm /g] | 55 |
| Erweichungspunkt R u. K [°C] | 124 |
| Penetration 100/25/5 [1/10 mm] | 19 |
| GPC-Analyse | U = 3,6; $\overline{M}_w$ = 39 000, $\overline{M}_v$ = 33 000, $\overline{M}_n$ = 8 600 |
| Etherunlöslicher Anteil [Gew.-%] | 26,8 |

Beispiel 8

Es wurde verfahren wie in Beispiel 6. Abweichend davon wurden ein Wasserstoffpartialdruck von 1,8 anstelle von 1,5 bar eingestellt und eine Ethenmenge von 25 g anstelle von 65 g in den Autoklaven gedrückt. Die Dauer der Ethenzufuhr betrug 50 Minuten, die Polymerisationsdauer 60 Minuten.
Ausbeute: 691 g
Produktivität: 4,4 kg Copolymerisat/mmol Ti

| NMR-Analyse des Copolymerisates [Gew.-%] | $C_2$ 3,6; $C_3$ 68,6; $C_4$ 27,6 |
|---|---|
| Schmelzviskosität 190 °C [mPa • s] | 4 800 bei einer Schergeschwindigkeit von 28,3 $s^{-1}$ |
| Viskositätszahl J [cm /g] | 50 |
| Erweichungspunkt R u. K [°C] | 121 |
| Penetration 100/25/5 [1/10 mm] | 25 |
| GPC-Analyse | U = 3,0; $\overline{M}_w$ = 38 000, $\overline{M}_v$ = 33 000, $\overline{M}_n$ = 9 400 |
| Etherunlöslicher Anteil [Gew.-%] | 22,2 |

Beispiel 9

Es wurde wie in Beispiel 6 verfahren. Davon abweichend betrug die Menge an Katalysatorfeststoff 40 anstelle von 60 mg. Als Cokatalysator wurde Triisobutylaluminium anstelle von Triethylaluminium eingesetzt und zusätzlich 0,025 mmol Cyclohexylmethyldimethoxysilan. Die Ethenmenge wurde in 112 Minuten in den Autoklaven gedrückt. Die Polymerisationsdauer betrug 180 Minuten.
Ausbeute: 565 g
Produktivität: 5,4 kg Copolymerisat/mmol Ti

| NMR-Analyse des Copolymerisates [Gew.-%] | $C_2$ 7,8; $C_3$ 70,3; $C_4$ 21,9 |
|---|---|
| Schmelzviskosität 190 °C [mPa • s] | 25 000 bei einer Schergeschwindigkeit von 3,26 $s^{-1}$ |
| Viskositätszahl J [cm /g] | 69 |
| Erweichungspunkt R u. K [°C] | 128 |
| Penetration 100/25/5 [1/10 mm] | 19 |
| GPC-Analyse | U = 3,2; $\overline{M}_w$ = 47 000, $\overline{M}_v$ = 42 000, $\overline{M}_n$ = 11 200 |
| Etherunlöslicher Anteil [Gew.-%] | 28,8 |

Beispiel 10

Es wurde wie in Beispiel 9 verfahren. Jedoch wurden 0,05 anstelle von 0,025 mmol Cyclohexylmethyldimethoxysilan eingesetzt. Das Ethen wurde innerhalb von 159 Minuten in den Autoklaven gedrückt. Die Polymerisationsdauer betrug 3 Stunden.
Ausbeute: 694 g
Produktivität: 6,7 kg Copolymerisat/mmol Ti

| NMR-Analyse des Copolymerisates [Gew.-%] | $C_2$ 7,3; $C_3$ 68,2; $C_4$ 24,5 |
|---|---|
| Schmelzviskosität 190 °C [mPa • s] | 12 000 bei einer Schergeschwindigkeit von 28,3 $s^{-1}$ |
| Viskositätszahl J [$cm^3/g$] | 61 |
| Erweichungspunkt R u. K [°C] | 125 |
| Penetration 100/25/5 [1/10 mm] | 18 |
| GPC-Analyse | U = 2,7; $\overline{M}_w$ = 50 000, $\overline{M}_v$ = 45 000, $\overline{M}_n$ = 13 500 |
| Etherunlöslicher Anteil [Gew.-%] | 32,2 |

Beispiel 11

a) Katalysatorherstellung:

Eine Mischung von 11,4 g Magnesiumethoxid und 17,0 ml n-Butyltitanat wurde unter Stickstoff 2 Stunden lang unter Rühren auf 190 °C erhitzt. Dabei löste sich das Magnesiumethoxid auf. Während des Abkühlens des Gemisches wurden bei ca. 80 °C unter Rühren 50 ml Hexanschnitt zugetropft, wobei sich ein Rückfluß einstellte. Nach dem Abkühlen auf Raumtemperatur wurde die erhaltene Lösung durch weitere Zugabe von Hexanschnitt auf ein Volumen von 100 ml gebracht. Der Ti-Gehalt der Lösung wurde zu 21,8 g/l bestimmt, der Mg-Gehalt zu 23,4 g/l.
22,0 ml dieser Lösung wurden unter Stickstoff mit 78 ml Hexanschnitt versetzt. Dazu wurden bei 20 °C und unter Rühren mit einer Drehzahl von 300 $min^{-1}$ im Laufe von 2 Stunden 61,2 ml einer 1,635-molaren Lösung von Isobutylaluminiumdichlorid in Hexanschnitt getropft. Die erhaltene Suspension wurde anschließend noch 2 Stunden bei gleicher Rührerdrehzahl unter Rückfluß erhitzt. Nach dem Abkühlen wurde der gebildete Katalysatorfeststoff abgetrennt und mit Hexanschnitt gewaschen. Er wurde in Hexanschnitt suspendiert und in dieser Form zur Polymerisation eingesetzt.
Der Katalysatorfeststoff enthielt 12,6 Gew.-% Ti, 9,8 Gew.-% Mg, 2,9 Gew.-% Al und 58,1 Gew.-% Cl.

b) Polymerisation

Es wurde verfahren wie in Beispiel 1. Davon abweichend wurde als Cokatalysator Triisobutylaluminium anstelle von Triethylaluminium eingesetzt und 2,7 ml einer Suspension in Hexanschnitt, enthaltend 40 mg des hier beschriebenen Katalysatorfeststoffs anstelle des in Beispiel 1 beschriebenen.
Ausbeute: 776 g
Produktivität: 7,4 kg Copolymerisat/mmol Ti

| NMR-Analyse des Copolymerisates [Gew.-%] | $C_3$ 73,1; $C_4$ 26,9 |
|---|---|
| Schmelzviskosität 190 °C [mPa • s] | 16 000 bei einer Schergeschwindigkeit von 3,31 $s^{-1}$ |
| Viskositätszahl J [$cm^3$/g] | 58 |
| Erweichungspunkt R u. K [°C] | 129,5 |
| Penetration 100/25/5 [1/10 mm] | 15 |

| Zugversuch: | |
|---|---|
| Streckspannung [N/$mm^2$] | 1,28 |
| Zugfestigkeit [ " ] | 1,51 |
| Reißfestigkeit [ " ] | 1,50 |
| Dehnung bei Streckspannung [%] | 72 |
| Reißdehnung [%] | 753 |
| Etherunlöslicher Anteil [Gew.-%] | 30,6 |

## Beispiel 12

Es wurde nach Beispiel 11 verfahren. Davon abweichend wurden 230 g Propen anstelle von 570 g eingesetzt sowie 570 g Buten-1 anstelle von 230 g. Der Wasserstoffpartialdruck betrug 1,5 bar anstelle von 2,0 bar.

Ausbeute: 719 g
Produktivität: 6,8 kg Copolymerisat/mmol Ti

| NMR-Analyse des Copolymerisates [Gew.-%] | $C_3$ 35,0; $C_4$ 65,0 |
|---|---|
| Schmelzviskosität 190 °C [mPa • s] | 20 000 bei einer Schergeschwindigkeit von 3,36 $s^{-1}$ |
| Viskositätszahl J [cm /g] | 63 |
| Erweichungspunkt R u. K [°C] | 91 |
| Penetration 100/25/5 [1/10 mm] | 16 |

| Zugversuch: | |
|---|---|
| Streckspannung [N/$mm^2$] | 1,07 |
| Zugfestigkeit [ " ] | 2,38 |
| Reißfestigkeit [ " ] | 2,37 |
| Dehnung bei Streckspannung [%] | 26,4 |
| Reißdehnung [%] | 659,2 |

## Beispiel 13

a) Katalysatorherstellung

Eine Mischung von 28,4 g Magnesium-n-propoxid und 34,0 ml n-Butyltitanat wurde unter Stickstoff eine Stunde lang unter Rühren auf 170 °C erhitzt. Dabei löste sich das Magnesium-n-propoxid auf. Während des Abkühlens des Gemisches wurden bei ca. 80 °C unter Rühren 100 ml Hexanschnitt zugetropft, wobei sich ein Rückfluß einstellte. Nach dem Abkühlen auf Raumtemperatur wurde die erhaltene Lösung durch weitere Zugabe von Hexanschnitt auf ein Volumen von 250 ml gebracht. Der Ti-Gehalt der Lösung wurde zu 17,9 g/l bestimmt, der Mg-Gehalt zu 19,2 g/l. 26,7 ml dieser Lösung wurden unter Stickstoff mit 73,3 ml Hexanschnitt versetzt. Dazu wurden bei 20 °C und unter Rühren mit einer Drehzahl von 300 $min^{-1}$ im Laufe von 2 Stunden 61,2 ml einer 1,635-molaren Lösung von Isobutylaluminiumdichlorid in Hexanschnitt getropft. Die erhaltene Suspension wurde anschließend noch 2 Stunden bei gleicher Rührerdrehzahl unter Rückfluß erhitzt. Nach dem Abkühlen wurde der gebildete Katalysatorfeststoff abgetrennt und mit Hexanschnitt gewaschen. Er wurde in Hexanschnitt suspendiert und in dieser Form zur Polymerisation eingesetzt.
Der Katalysatorfeststoff enthielt 13,2 Gew.-% Ti, 12,9 Gew.-% Mg, 3,7 Gew.-% Al und 59,4 Gew.-% C.

b) Polymerisation

Es wurde wie nach Beispiel 12 verfahren. Davon abweichend wurden 3,05 ml einer Suspension in Hexanschnitt, enthaltend 40 mg des hier beschriebenen Katalysatorfeststoffes eingesetzt.
Ausbeute: 755 g
Produktivität: 6,9 kg Copolymerisat/mmol Ti

| NMR-Analyse des Copolymerisates [Gew.-%] | $C_3$ 33,2; $C_4$ 66,8 |
|---|---|
| Schmelzviskosität 190 °C [mPa • s] | 21 000 bei einer Schergeschwindigkeit von 3,26 $s^{-1}$ |
| Viskositätszahl J [cm$^3$/g] | 63 |
| Erweichungspunkt R u. K [°C] | 90 |
| Penetration 100/25/5 [1/10 mm] | 20 |
| Etherunlöslicher Anteil [Gew.-%] | 14,3 |

Beispiel 14

a) Katalysatorherstellung

Eine Mischung von 11,4 g Magnesiumethoxid und 17,0 ml n-Butyltitanat wurde unter Stickstoff 2 Stunden lang unter Rühren auf 190 °C erhitzt. Dabei löste sich das Magnesiumethoxid auf. Während des Abkühlens des Gemisches wurden bei ca. 80 °C unter Rühren 50 ml Hexanschnitt zugetropft, wobei sich ein Rückfluß einstellte. Nach dem Abkühlen auf Raumtemperatur wurde die erhaltene Lösung durch weitere Zugabe von Hexanschnitt auf ein Volumen von 100 ml gebracht. Der Ti-Gehalt der Lösung wurde zu 22,7 g/l, der Mg-Gehalt zu 24,6 g/l bestimmt.

21,1 ml dieser Lösung wurden unter Stickstoff mit 78,9 ml Hexanschnitt versetzt. Dazu wurden unter Erhitzen zum Rückfluß und Rühren mit einer Drehzahl von 300 min$^{-1}$ im Laufe von 2 Stunden 80,0 ml einer 1,25-molaren Lösung von Ethylaluminiumdichlorid in Hexanschnitt getropft. Die Temperatur des Reaktionsmediums betrug dabei 63 - 65 °C. Die erhaltene Suspension wurde noch 2 Stunden bei gleicher Rührerdrehzahl unter Rückfluß erhitzt. Nach dem Abkühlen wurde der gebildete Katalysatorfeststoff abgetrennt und mit Hexanschnitt gewaschen. Er wurde in Hexanschnitt suspendiert und in dieser Form zur Polymerisation eingesetzt.
Der Katalysatorfeststoff enthielt 9,1 Gew.-% Ti, 10,1 Gew.-% Mg, 3,5 Gew.-% Al, 52,4 Gew.-% Cl.

b) Polymerisation

Es wurde wie nach Beispiel 4 verfahren. Abweichend davon wurden 2,8 ml einer Suspension in Hexanschnitt eingesetzt, enthaltend 40 mg des hier beschriebenen Katalysatorfeststoffs anstelle des in Beispiel 1 beschriebenen.
Ausbeute: 720 g
Produktivität: 9,5 kg Copolymerisat/mmol Ti

| NMR-Analyse des Copolymerisates [Gew.-%] | $C_3$ 71,9; $C_4$ 28,1 |
|---|---|
| Schmelzviskosität 190 °C [mPa • s] | 6 300 bei einer Schergeschwindigkeit von 28,1 $s^{-1}$ |
| Viskositätszahl J [cm$^3$/g] | 52 |
| Erweichungspunkt R u. K [°C] | 132 |
| Penetration 100/25/5 [1/10 mm] | 19 |
| Etherunlöslicher Anteil [Gew.-%] | 26,2 |

Beispiel 15

Es wurde wie nach Beispiel 14 verfahren. Abweichend davon wurde als Cokatalysator Triethylaluminium anstelle von Triisobutylaluminium eingesetzt.

Ausbeute: 578 g
Produktivität: 7,6 kg Copolymerisat/mmol Ti

| NMR-Analyse des Copolymerisates [Gew.-%] | $C_3$ 73,3; $C_4$ 26,7 |
|---|---|
| Schmelzviskosität 190 °C [mPa • s] | 5 500 bei einer Schergeschwindigkeit von 28,3 $s^{-1}$ |
| Viskositätszahl J [$cm^3$/g] | 48 |
| Erweichungspunkt R u. K [°C] | 131 |
| Penetration 100/25/5 [1/10 mm] | 17 |
| Etherunlöslicher Anteil [Gew.-%] | 28,7 |

Vergleichsbeispiel 2

In einen 5-l-Stahlautoklaven wurden unter Stickstoff 800 ml n-Butan eingefüllt. Zur Entfernung des Stickstoffs wurden 4 l Gas entspannt. Anschließend wurden 800 g Buten-1 in den Autoklaven gedrückt. Ein Wasserstoffpartialdruck von 1,5 bar wurde eingestellt und der Autoklaveninhalt aufgeheizt. Bei Erreichen von 70 °C wurde eine Mischung aus 18 ml einer 2 mmol Triisobutylaluminium enthaltenden Lösung in Hexanschnitt und 2,9 ml einer Suspension in Hexanschnitt, enthaltend 40 mg des nach Beispiel 1 hergestellten Katalysatorfeststoffs, über eine Schleuse in den Autoklaven abgelassen. Es wurde unter Rühren auf 90 °C aufgeheizt und 5 Stunden bei dieser Temperatur und einer Rührerdrehzahl von 1 000 $min^{-1}$ polymerisiert. Dann wurde zur Zersetzung der Katalysatorreste und Stabilisierung des Polybutens eine Lösung von 1,6 g Irganox® 1010 in 1,8 ml n-Propanol über eine Schleuse in den Autoklaven gegeben. Nach Abdampfen des Verdünnungsmittels n-Butan und des überschüssigen Buten-1 wurde der Rückstand unter Stickstoff bei ca. 160 °C aufgeschmolzen und durch eine Öffnung in dem Autoklaven in eine Schale abgelassen.

Ausbeute: 683 g
Produktivität: 6,6 kg Polybuten/mmol Ti

| Schmelzviskosität 190 °C [mPa • s] | 76 000 bei einer Schergeschwindigkeit von 3,31 $s^{-1}$ |
|---|---|
| Viskositätszahl J [cm /g] | 81 |
| Erweichungspunkt R u. K [°C] | 116 |
| Penetration 100/25/5 [1/10 mm] | 8 |
| GPC-Analyse | U = 5,6; $\overline{M}_w$ = 81 000, $\overline{M}_v$ = 71 000, $\overline{M}_n$ = 12 400 |
| Etherunlöslicher Anteil [Gew.-%] | 62,9 |

**Patentansprüche**

1. Verfahren zur Herstellung von amorphen oder wenig kristallinen Co- oder Terpolymeren aus 25 bis 85 Gew.-% Propen und 15 bis 75 Gew.-% eines $\alpha$-Olefins mit 4 bis 8 C-Atomen sowie gegebenenfalls bis zu 20 Gew.-% Ethen, wobei man die infragekommenden Olefine mit Hilfe eines Katalysators polymerisiert, der aus

   (a) einer Magnesium, Titan und Chlor enthaltenden Katalysatorkomponente und

   (b) einer aluminiumorganischen Verbindung besteht,

   dadurch gekennzeichnet, daß die Magnesium, Titan und Chlor enthaltende Katalysatorkomponente hergestellt wird durch Umsetzung

   (1) eines in flüssigen Kohlenwasserstoffen löslichen Komplexes aus

   (1.1) einem Magnesiumalkoxid der allgemeinen Formel $Mg(OR^1)_2$, in der $R^1$ einen Alkylrest mit zwei bis zehn Kohlenstoffatomen bedeutet, und

   (1.2) einer Verbindung des vierwertigen Titans der allgemeinen Formel $TiCl_x(OR^2)_{4-x}$, in der $R^2$ gleiche oder verschiedene Alkylreste mit 2 bis 20 C-Atomen und x eine Zahl von 0 bis 2 bedeutet,

wobei das Molverhältnis von Magnesium zu Titan 1 : 3 bis 3 : 1 beträgt, mit

(2) einer aluminiumorganischen Verbindung der allgemeinen Formel $AlR^3_nCl_{3-n}$, in der $R^3$ einen Alkylrest mit 2 bis 10, vorzugsweise 2 bis 4 C-Atomen und n eine Zahl von 1,0 bis 2,0 bedeutet,

der so erhaltene Feststoff abgetrennt wird und mit einer Trialkylaluminiumverbindung der allgemeinen Formel $AlR^4_3$ aktiviert wird, in der $R^4$ einen Alkylrest mit 2 bis 10, vorzugsweise 2 bis 4 C-Atomen bedeutet.

2. Verfahren gemäß Anspruch 1,
dadurch gekennzeichnet,
daß als $\alpha$-Olefin mit 4 bis 8 C-Atomen Buten-1 eingesetzt wird.

3. Verfahren gemäß einem der vorhergehenden Ansprüche,
dadurch gekennzeichnet,
daß in der Verbindung $TiCl_x(OR^2)_{4-x}$ x eine Zahl zwischen 0 und 1 und bevorzugt 0 ist.

4. Verfahren gemäß einem der vorhergehenden Ansprüche,
dadurch gekennzeichnet,
daß in der Verbindung $AlR^3_nCl_{3-n}$ n eine Zahl von 1 bis 1,5 bedeutet.

5. Verfahren gemäß einem der vorhergehenden Ansprüche,
dadurch gekennzeichnet,
daß als Verbindung $AlR^3_nCl_{3-n}$ Ethylaluminiumdichlorid oder Isobutylaluminiumdichlorid eingesetzt wird.

6. Verfahren gemäß einem der vorhergehenden Ansprüche,
dadurch gekennzeichnet,
daß der Magnesium und Titan enthaltende Komplex mit der Verbindung $AlR^3_nCl_{3-n}$ in Molverhältnissen von Al/(Mg + Ti) gleich 2,0 bis 5,0 bei Temperaturen von 0 °C bis 120 °C, vorzugsweise von 20 °C bis 85 °C, umgesetzt wird.

7. Verfahren gemäß einem der vorhergehenden Ansprüche,
dadurch gekennzeichnet,
daß als Verbindung $AlR^4_3$ Triethylaluminium und/oder Triisobutylaluminium verwendet werden.

8. Verfahren gemäß einem der vorhergehenden Ansprüche,
dadurch gekennzeichnet,
daß als weitere Katalysatorkomponente ein Alkoxysilan der allgemeinen Formel $R^5_mSi(OR^6)_{4-m}$ verwendet wird, wobei $R^5$ einen aliphatischen oder cycloaliphatischen Rest mit 1 bis 6 C-Atomen bedeutet, m gleich 1 oder 2 sein kann und $R^6$ ein Alkylrest mit maximal 6 C-Atomen ist.

9. Verfahren gemäß einem der vorhergehenden Ansprüche,
dadurch gekennzeichnet,
daß die Polymerisation in Gegenwart von Wasserstoff durchgeführt wird.

10. Verfahren gemäß einem der vorhergehenden Ansprüche,
dadurch gekennzeichnet,
daß das Polymerisat eine Uneinheitlichkeit von maximal 4 aufweist.

11. Co- oder Terpolymere, hergestellt gemäß einem der vorhergehenden Ansprüche.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 525 554 (TANAKA ET AL.)<br>* Zusammenfassung; Ansprüche *<br>* Spalte 3, Zeile 39 - Spalte 4, Zeile 2 *<br>* Beispiele *<br>--- | 1-7,9,11 | C08F210/04<br>C08F4/658 |
| A | EP-A-0 500 308 (SHELL OIL CO.)<br>* Zusammenfassung; Beispiel III *<br>----- | 1-8 | |

**RECHERCHIERTE SACHGEBIETE (Int.Cl.6)**

C08F

Der vorliegende Recherchenbericht wurde für alle Patentansprüche erstellt

| Recherchenort | Abschlußdatum der Recherche | Prüfer |
|---|---|---|
| DEN HAAG | 28. Oktober 1994 | Mettler, R-M |